Europäisches Patentamt

European Patent Office

Office européen des brevets

(19)

(11) Publication number: **0 293 016 B1**

(12)

# EUROPEAN PATENT SPECIFICATION

(45) Date of publication of patent specification :
**31.07.91 Bulletin 91/31**

(51) Int. Cl.⁵: **C01B 33/34, C01B 33/21**

(21) Application number: **88109353.8**

(22) Date of filing : **18.10.85**

(54) **A process for manufacturing organoclays having enhanced gelling properties.**

(43) Date of publication of application :
**30.11.88 Bulletin 88/48**

(60) Publication number of the earlier application in
accordance with Art. 76 EPC: **0 220 346**

(45) Publication of the grant of the patent:
**31.07.91 Bulletin 91/31**

(84) Designated Contracting States :
**AT BE CH DE FR GB IT LI LU NL SE**

(56) References cited :
**FR-A- 2 226 360**
**US-A- 3 574 345**
**US-A- 4 371 626**
**US-A- 4 469 639**

(73) Proprietor: **SOUTHERN CLAY PRODUCTS,
INC.
P.O.Box 44
Gonzales, TX 78629 (US)**

(72) Inventor: **Jones, Thomas Richard
11 North Hill Park
St. Austell Cornwall PL 25 4BJ (GB)**
Inventor: **Knudson, Milburn J
Box 553, Rd No. 1
Gonzales, Texas 78629 (US)**

(74) Representative: **Bull, Michael Alan et al
Haseltine Lake & Co. Hazlitt House 28
Southampton Buildings Chancery Lane
London WC2A 1AT (GB)**

Jouve, 18, rue Saint-Denis, 75001 PARIS

## Description

This is a divisional application of European Patent Applications No 85307548.9 (0220346).

This invention relates generally to organophilic clays (hereinafter referred to as "organoclays"), and more specifically relates to an improved process for manufacture of same, which process strikingly enhances the gelling properties of the said products.

Organoclays, representing the reaction product of a smectite-type clay with a higher alkyl-containing quaternary ammonium compound, have long been known for use in gelling of organic liquids such as lubricating oils, linseed oil, toluene and the like. A large variety of highly useful products, such as lubricating greases are producible through use of such gelling agents. The procedures and chemical reactions pursuant to which these organoclays are prepared, are wellknown. Thus, under appropriate conditions, the organic compound which contains a cation, will react by ion exchange with clays which contain a negative layer lattice and exchangeable cations to form the organoclay products. If the organic cation contains at least one alkyl group containing at least 10 carbon atoms, then the resultant organoclays will have the property of swelling in certain organic liquids.

Among the prior art patents which discuss at length aspects of the preparation and properties of organoclays, as above outlined, are U.S. Patents No. 2,531,427 ; 2,966,506 ; 3,974,125 ; 3,537,994 ; and 4,081,496. Reference may also be had to applicable portions of the standard reference work "Clay Mineralogy", 2nd Edition, 1968, by Ralph E. Grim, McGraw Hill Book Company.

In the usual procedure for preparing an organophilic clay pursuant to this prior art, the smectite-type clay, a selected quaternary compound and water are mixed together, preferably at an elevated temperature, typically in the range of 100°F (38°C) and 180°F (82°C) for a period of time sufficient for the organic quaternary ammonium compound to coat the clay particles. Thereafter, the product can be filtered, washed, dried and ground, or otherwise processed, depending upon the intended use. In some instances, for example the drying and grinding step may be omitted. Various other modifications of this process may be used depending upon the form of product desired — as will be noted in the referenced patents.

Now in accordance with the present invention, it has unexpectedly been discovered that the known process for manufacture of an organoclay, wherein a smectite-type clay is reacted with a higher alkyl-containing quaternary ammonium compound, may be improved to yield striking enhancement of the gelling properties of the resultant organoclay product, by subjecting the clay as a pumpable slurry to high energy pugmilling, prior to the said reaction thereof with the ammonium compound, by extruding the clay whilst moist through a pugmill which imparts at least 20 HP-hr/ton (52kJ/kg) dry clay of energy to the clay.

Preferably, the pugmilling is effected by passing the clay through the pugmill at 25 to 40 weight percent moisture content.

Cursory reference has been made in U.S. Patents Nos. 4,081,496 and 4,116,866 to use of a pugmill for shearing an aqueous clay slurry. However, in these patents the pugmilling was used solely to assist reaction of the clay with a soluble sodium compound.

The high energy pugmilling to which the smectite-type clay is subjected, is preferably effected by passing the smectite-type clay through a pugmill of the type disclosed in U.S. Patent No. 3,574,345. Such device includes a barrel, a motor driven screw mounted in the barrel, and apertured plates at the tapered output end of the barrel from which the material worked in the pugmill is extruded. The said pugmill differs especially from conventional pugmills in having an L/D ratio of from 4 : 1 to 10 : 1, where L is the effective length of the screw or auger in the barrel of the pugmill, and D is the internal diameter of the portion of the barrel containing the screw.

It is preferable in accordance with the invention, to impart at least 40 to 50 HP-hr energy per ton (119 to 149 kJ/kg) of dry clay to the materials passing through the pugmill. Higher levels of energy may also be usefully imparted, although this may require multiple passes through the pugmill.

The precise manner in which the high energy pugmilling acts to enable the remarkable improvements in gelling properties is not fully understood. Among other things, however, it has been found that such treatment has a marked effect on the average particle size of the clay. It has thus been determined that where a smectite-type clay having an average particle size of 0.475 micrometers is passed through such a pugmill and approximately 30 HP-hr/ton (89 kJ/kg) clay of energy is dissipated therein, the average particle size is reduced to 0.391 micrometers. At energy dissipation levels of 51 and 108 HP-hr/ton, (151 and 320 kJ/kg respectively), a feed clay having an average particle size of 0.756 micrometers is so changed that the particle size is reduced to 0.277 and 0.276 micrometers, respectively. This data indicates a very substantial average particle size reduction, and is one consequence of the treatment of the clay. (These data are weight average particle size of the bentonite dispersed in water, as measured on a "Nanosizer" apparatus marketed by Coulter).

The smectite-type clays which are subjected to the improved process of this invention, are precisely those which have been conventionally utilized in the prior art in the preparation of organoclays as aforementioned. These are smectite-type clays which have a cation exchange capacity of at least 75 milliequivalents per 100 grams of clay. Useful clays for such purposes include the naturally occurring Wyoming variety of swelling bentonite and similar clays, and hectorite, which is a swelling magnesiumlithium silicate clay. The clays are preferably converted to the sodium form if they are not already in this form. This can be effected, again as is known in the art, by a cation exchange reaction, or the clay can be converted via an aqueous reaction with a soluble sodium compound.

Smectite-type clays prepared synthetically can also be utilized, such as montmorillonite, bentonite, beidelite, hectorite-saponite, and stevensite.

In a typical procedure pursuant to the invention, the crude smectite-type clay, as for example a bentonite, is adjusted with water to approximately 60.0 to 75.0% solids. The crude is then passed through a pugmill under conditions which impart at least 40 to 50 HP-hr energy per ton (119 to 149 kJ/kg) of dry clay. In the event that the crude is not a sodium clay, sodium carbonate may be added during the pugmilling process to produce a sodium bentonite. The clay is then dispersed in water at relatively low solids, typically at less than 10% by weight. The slurry is then screened and centrifuged to remove non-clay components and especially abrasive elements such as quartz. The centrifuge is preferably set to recover a less than 4 micrometers cut, as is usual in preparing the clay before the organic reaction.

The fine fraction from the centrifuge, which typically includes 4 to 5% solids, is then subjected to high speed fluid shear in accordance with the invention. The reaction of the high speed or pugmilled clay with the amine is effected by the conventional procedures described at great length in the prior art, including in the previously mentioned patents.

The organic compounds which are reacted with the treated clay are quaternary ammonium salts, where the salt anion is preferably chloride or bromide or mixtures thereof ; and is more preferably chloride ion. The salt anion may also, however, be nitrate, hydroxyl, acetate, or mixtures of these, Any of such compounds as are known to be useful in producing organoclay gellants of the type herein discussed may be used in this aspect of the invention, specifically including the compounds so reported useful in the patents heretofore cited. Among others these include dimethyl di(hydrogenated tallow), dimethyl benzyl hydrogenated tallow, dibenzyl dialkyl, methyl benzyl dialkyl, and trimethyl hydrogenated tallow salts.

Pursuant to the improvements yielded by the invention, the gelling characteristics i.e. the gelling efficiency of the clays treated by the invention, are so markedly enhanced, as to make possible use of quantities of the gelling agent to achieve a given result, which are reduced in comparison to the amount which would be required in the absence of the invention. Further clays, such as certain deposits of bentonite-type clays which heretofore had been considered unacceptable as crude materials for use in preparing suitable gellants, are found when treated by the precess of the invention, to yield organoclay gelling agents which are fully acceptable for use in gelling organic liquids or the like, A net effect of the invention in this regard, is therefore to enable highly effective use of crude deposits previously deemed unusable for these purposes, thereby vastly expanding the possible sources of raw materials which can be used to produce the final gellant products.

For a better understanding of the present invention, and to show how the same may be carried into effect, reference will now be made, by way of example, to the accompanying drawings in which :

Figure 1 is a graph comparing the effects of gelling a diesel fuel with a bentonite slurry prepared by the process of the invention, with a bentonite slurry which has been conventionally processed;

Figure 2 is a graph similar to Figure 1 and illustrating the comparative results achieved where an organoclay in accordance with the invention, and a control untreated organoclay, are each used in the gelling of odorless mineral spirits ; and

Figure 3 is a further graph similar to the foregoing graphs, and illustrating comparable data for a toluene gel.

The invention will now be illustrated by a series of Examples, which are intended to set forth typical and preferred procedures which may be utilized in the practice of the present invention.

## EXAMPLE 1

In this Example, the smectite-type clay utilized as a starting material was a Wyoming bentonite. The crude bentonite was initially dispersed in water to approximately 60 to 75% solids, and was then passed through a pugmill of the type disclosed in the aforementioned U.S. Patent No 3,574,345. The mill had an L/D ratio of about 7.5 : 1. Approximately 40 to 50 HP-hr/ton (119 to 149 kJ/kg) of dry clay of energy was imparted to the materials. The pugged bentonite was thereupon dispersed in water at 7% solids by weight. The slurry was thereupon screened, and then centrifuged to remove non-clay components and especially abrasive elements such as quartz. The fine fraction from the centrifuge, then included approximately 4 to 5% solids by weight. The treated samples were divided into further portions which were reacted with the salt of a dimethyl di(hydrogenated tallow) amine. The ratio of amine to clay was varied in the samples from 85 to 105 milliequivalents per 100 grams of clay on a 100% active clay basis. The amine was stirred into the approximately 4 to 5% solids slurry at 60°C, with stirring being continued for approximately 1/2 hour, after which the material was filtered, washed with water and dried at 60°C. The dried material was pulverised with a Mikropul mill to approximately 95% less than 0.076 mm (200 mesh). Tests were then conducted to determine the gelling properties of each of the control and invention samples.

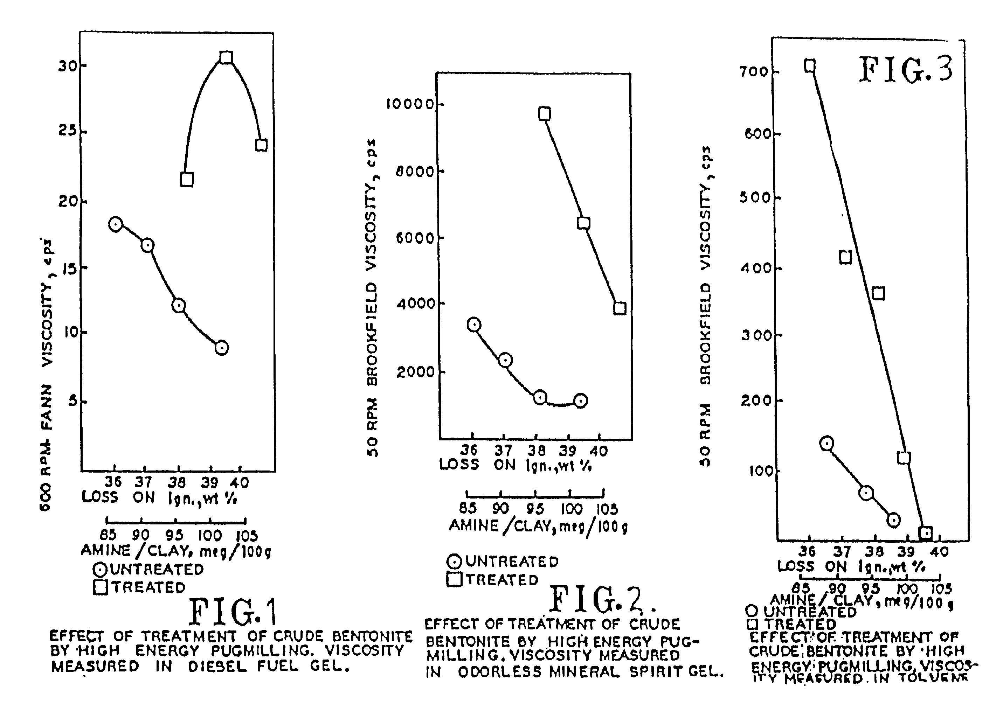

In Figure 1, Fann viscosity in cps is plotted as function of milliequivalents of the amine added to the clay for the untreated bentonite samples, i.e., the prior art samples, and for the sample treated in accordance with the invention. (Loss on ignition is also plotted as abscissa, which is a measure of the organic combined with the clay). The type of bentonite utilized in this example is considered by those skilled in the art to be relatively "good" for use in preparing organoclay gellants. Viscosity measurements were effected by measuring a quantity of diesel oil into a multi-mixer can. In each instance, the sample to be evaluated was added to the diesel oil with stirring, after which water was stirred into the mix, the can removed from the mixer, and placed on the Fann viscometer, and the 600 and 300 rpm readings obtained. Gel readings were obtained after 10 seconds. It will be apparent that a vast improvement in viscosity of the gelled diesel fuel is evidenced across all ranges of the amine-to-clay ratio where the method of the invention is used.

EXAMPLE 2

In this instance, the same procedure was utilised as in Example 1, except that the effects of the invention on the gellant were evaluated by admixing same with odorless mineral spirits (OMS). In the said procedure, a fixed quantity of the odorless mineral spirits was transferred to a container and the temperature was established for same. A small quantity of 100% propylene carbonate was added, while stirring. Next, a specified quantity of the sample to be evaluated was transferred to the container, followed by vigorous stirring. The mixture was blunged with a Cowles blade for two minutes and the gel stirred for 10 revolutions with a spatula. The container was covered and the gel allowed to remain in a constant temperature bath at 24°C, + or –1°C for two hours, after which the gel viscosity was measured on a Brookfield viscometer. The resulting data is plotted in Figure 2, and establishes an even more remarkable difference between the treated and untreated organoclays with respect to their ability to gel the said odorless mineral spirits.

EXAMPLE 3

In Figure 3, a similar material to that used in Examples 1 and 2, resulting from the present invention, is evaluated for its gelling characteristics in toluene. In this procedure, 6 grams of the organoclay was admixed with 340 ml of toluene by use of a Waring blender. 2.3 ml of a polar dispersant was then added, consisting of 95% by weight methanol and 5% by weight of deionized water, and additional blending carried out. (In general, small proportions of polar compounds may be added to develop maximum viscosity. Typical polar activators are water, methanol, and propylene carbonate). The contents were then poured into a container, allowing the gel to flow very thinly over the container lip. Thus allowing any air bubbles to escape. The container was maintained in a water bath at 24°C + or –1°C, for two hours, after which Brookfield viscosity readings were obtained. Once again, Figure 3 illustrates the striking improvements yielded by practice of the invention.

## Claims

1. A process for the manufacture of an organoclay having enhanced gelling properties comprising reacting a smectite-type clay with a higher alkyl-containing quaternary ammonium compound, characterised in that the clay is subjected to high energy pugmilling prior to said reaction thereof with said ammonium compound by passing said clay while moist through a pugmill which imparts at least 20 HP-hrs/ton of energy (60 kJ/kg) to the moist clay.

2. A method in accordance with claim 1, characterised in that the pugmilling is effected by passing the clay through the pugmill at 25 to 40 weight percent moisture content.

3. A method in accordance with claim 1 or 2, wherein the energy imparted during pugmilling, is at least 40 HP-hr/ton (120 kJ.Kg$^{-1}$).

4. A method in accordance with claim 1, 2 or 3, characterised in that said pugmill has an L/D ratio of from about 4 : 1 to 10 : 1.

5. A process for the manufacture of an organoclay gellant from a crude smectite-type clay considered unacceptable for use in preparing such organoclay, which comprises subjecting the smectite-type clay considered un-acceptable to high energy pugmilling by passing said clay while moist through a pugmill which imparts at least 20 Hp-hrs/ton (60 kJ/kg) of energy to the moist clay, and then reacting said pugmilled clay in its sodium form with a higher alkylcontaining quaternary ammonium compound.

6. A method in accordance with claim 5, wherein said clay is passed through said pugmill at 25 to 40 weight percent moisture content.

7. A method in accordance with claim 6, wherein said energy imparted by said pugmill is at least 40 Hphr/ton (120 kJ/kg).

## Patentansprüche

1. Verfahren zur Herstellung von Organoton mit verbesserten Gelierungseigenschaften, das die Reaktion eines fettonartigen Tons mit einer höheren alkylhaltigen quaternären Ammoniumverbindung umfaßt, dadurch **gekennzeichnet**, daß der Ton vor der Reaktion mit der Ammoniumverbindung einem energiereichen Lehmkneten unterworfen wird, dadurch, daß der Ton in feuchtem Zustand durch einen Mörtelmischer gepreßt wird, wobei dem feuchten Ton wenigstens 20 HP-hrs/ton an Energie (60 kJ/kg) zugeführt werden.

2. Verfahren nach Anspruch 1, dadurch **gekennzeichnet**, daß das Lehmkneten durch Pressen des Tons mit 25 bis 40 Gew.-% Feuchtigkeitsgehalt durch den Mörtelmischer bewirkt wird.

3. Verfahren nach Anspruch 1 oder 2, bei dem die Energie, die während des Lehmknetens zugeführt wird, wenigstens 40 HP-hrs/ton (120 kJ/kg) beträgt.

4. Verfahren nach Anspruch 1, 2 oder 3, dadurch **gekennzeichnet**, daß der Mörtelmischer ein L/D-Verhältnis von ungefähr 4 : 1 bis 10 : 1 hat.

5. Verfahren zur Herstellung eines Organotons in Gelform aus einem rohen fettonartigen Ton, der als ungeeignet zur Herstellung eines solchen Organotons betrachtet wird, wobei das Verfahren das Unterwerfen des fettonartigen Tons, der als ungeeignet betrachtet wird, einem energiereichen Lehmkneten durch Pressen des Tons in feuchtem Zustand durch einen Mörtelmischer, wobei dem feuchten Ton wenigstens 20 HP-hrs/ton (60 kJ/kg) an Energie zugeführt werden, und das anschließende Reagieren des gekneteten Tons in seiner Natriumform mit einer höheren alkylhaltigen quaternären Amoniumverbindung umfaßt.

6. Verfahren nach Anspruch 5, bei dem der Ton durch den Mörtelmischer mit 25 bis 40 Gew.-% Feuchtigkeitsgehalt gepreßt wird.

7. Verfahren nach Anspruch 6, bei dem die Energie, die während des Lehmknetens zugeführt wird, wenigstens 40 Hp-hrs/ton (120 kJ/kg) beträgt.

## Revendications

1. Procédé pour la fabrication d'une organo argile ayant des propriétés gélifiantes intensifiées comprenant la réaction d'une argile de type smectite avec un composé ammonium quaternaire contenant un alkyle supérieur, caractérisé en ce que l'argile est soumise à un broyage à haute énergie avant ladite réaction avec le composé ammonium en passant ladite argile encore humide à travers un moulin à argile qui dispense au moins une énergie de 20 HP-hrs/ton (60 kJ/kg) à l'argile humide.

2. Procédé selon la revendication 1, caractérisé en ce que le broyage est effectué en faisant passer l'argile à travers le moulin à argile avec une teneur en humidité de 25 à 40% en poids.

3. Procédé selon les revendications 1 ou 2, dans lequel l'énergie dispensée pendant le broyage est d'au moins 40 HP-hr/ton (120 KJ.Kg⁻¹).

4. Procédé selon les revendications 1, 2 ou 3, caractérisé en ce que ledit moulin à argile a un rapport L/D d'environ 4 : 1 à 10 : 1.

5. Procédé pour la fabrication d'un gélifiant à organo argile à partir d'une argile brute du type smectite considérée inadaptée pour une utilisation dans la préparation d'une telle organo argile, qui comprend le traitement de l'argile de type smectite considérée inadaptée par un broyage à haute énergie en faisant passer ladite argile pendant qu'elle est humide à travers un moulin à argile qui dispense une énergie d'au moins 20 Hp-hrs/ton (60 kJ/kg) à l'argile humide, puis la réaction de ladite argile broyée sous sa forme sodium avec un composé ammonium quaternaire contenant un alkyle supérieur.

6. Procédé selon la revendication 5, dans lequel ladite argile est passée à travers ledit moulin à argile avec une teneur en humidité de 25 à 40% en poids.

7. Procédé selon la revendication 6, dans lequel ladite énergie dispensée par ledit moulin à argile est d'au moins 40 Hp-hr/ton (120 kJ/kg).

**FIG.1**
EFFECT OF TREATMENT OF CRUDE BENTONITE BY HIGH ENERGY PUGMILLING. VISCOSITY MEASURED IN DIESEL FUEL GEL.

600 RPM FANN VISCOSITY, cps
LOSS ON Ign., wt %
AMINE/CLAY, meg/100g
⊙ UNTREATED
□ TREATED

**FIG.2.**
EFFECT OF TREATMENT OF CRUDE BENTONITE BY HIGH ENERGY PUGMILLING. VISCOSITY MEASURED IN ODORLESS MINERAL SPIRIT GEL.

50 RPM BROOKFIELD VISCOSITY, cps
LOSS ON Ign., wt %
AMINE/CLAY, meg/100g
⊙ UNTREATED
□ TREATED

**FIG.3**
EFFECT OF TREATMENT OF CRUDE BENTONITE BY HIGH ENERGY PUGMILLING. VISCOSITY MEASURED IN TOLUENE

50 RPM BROOKFIELD VISCOSITY, cps
LOSS ON Ign., wt %
AMINE/CLAY, meg/100g
○ UNTREATED
□ TREATED

EP 0 293 016 B1